**Europäisches Patentamt**

**European Patent Office**

**Office européen des brevets**

(19)

(11) Veröffentlichungsnummer: **0 128 145**
**B1**

(12) # EUROPÄISCHE PATENTSCHRIFT

(45) Veröffentlichungstag der Patentschrift:
**29.01.86**

(21) Anmeldenummer: **83901404.0**

(22) Anmeldetag: **13.05.83**

(86) Internationale Anmeldenummer:
**PCT/EP 83/00122**

(87) Internationale Veröffentlichungsnummer:
**WO 84/00409 (02.02.84 Gazette 84/3)**

(51) Int. Cl.⁴: **F 16 H 39/00, B 28 C 5/42**

(54) **HYDROSTATISCHER ANTRIEB, INSBESONDERE FÜR MISCHTROMMELN VON TRANSPORTBETONFAHRZEUGEN.**

(30) Priorität: **16.07.82 DE 3226631**

(43) Veröffentlichungstag der Anmeldung:
**19.12.84 Patentblatt 84/51**

(45) Bekanntmachung des Hinweises auf die Patenterteilung:
**29.01.86 Patentblatt 86/5**

(84) Benannte Vertragsstaaten:
**DE FR GB NL**

(56) Entgegenhaltungen:
**DE - A - 2 931 969**
**DE - B - 1 082 134**
**GB - A - 865 146**

(73) Patentinhaber: **ZAHNRADFABRIK FRIEDRICHSHAFEN AKTIENGESELLSCHAFT, Löwentaler Strasse 100 Postfach 2520,**
**D-7990 Friedrichshafen 1 (DE)**

(72) Erfinder: **MANN, Egon, Alamannenweg 11,**
**D-7990 Friedrichshafen (DE)**
Erfinder: **BACH, Hans-Peter, Hoher Weg 53/1,**
**D-7990 Friedrichshafen 24 (DE)**

(74) Vertreter: **Raue, Reimund, Zahnradfabrik Friedrichshafen AG Löwentaler Strasse 100 Postfach 2520,**
**D-7990 Friedrichshafen 1 (DE)**

## Beschreibung

Die Erfindung betrifft einen hydrostatischen Antrieb, insbesondere für Mischtrommeln von Transportbetonfahrzeugen. Aus der DE-A-29 31 969 sind Lösungswege bekannt, den konstruktiven Aufbau hydrostatischer Antriebe durch Einbeziehung des Hydromotors in das Getriebegehäuse bzw. durch Ausnutzung desselben als Kühlfläche und als gemeinsame Ölvorlage zu vereinfachen und zu kompaktieren sowie dabei Kühlaufwand zu sparen. Die dort aufgezeigte Bauform des Getriebegehäusemantels mit einem dem Hydromotor vorgelagerten Beruhigungsraum und einer an sich unkontrollierten, vorzugsweise als „spiralförmig rotierenden Sammelstrom" angestrebten Ölbewegung genügt indessen den Kosteneinsparungsforderungen und Kompaktierungszielen noch nicht. Um nämlich eine befriedigende Kühlleistung auch bei starker Nutzung und hohen Aussentemperaturen zu erreichen, müssen bei dieser Anordnung entweder grössere Gehäuseabmessungen oder grössere Ventilatorleistungen, als für viele Einsatzfälle erwünscht, vorgesehen werden. Eine Intensivierung der Ölbewegung durch noch stärkeres Pantschen im mechanischen Getriebeteil kann ebenfalls nicht in Betracht gezogen werden.

Aufgabe der in Anspruch 1 angegebenen Erfindung ist es daher, einen hydrostatischen Antrieb zu schaffen, welcher bei geringem Energiebedarf mit sehr geringer Kühlfläche und ohne Erhöhung der Pantschverluste im mechanischen Getriebeteil auskommend bei kompakter Bauweise kostengünstig mit weiteren mechanischen Übersetzungsstufen kombinierbar ist.

Diese Aufgabe wird mit den im Kennzeichen des Anspruchs 1 angegebenen Merkmalen der Erfindung gelöst. Damit wird erreicht, dass die Ölbewegung im Kühlbereich nicht mehr unkontrolliert ist und dass zur Vermeidung von Einflüssen des Pantschens im mechanischen Getriebeteil ein Beruhigungsraum nicht mehr erforderlich ist. Hier findet nun die Ölbewegung nur noch in einem nach Art eines Wärmeaustauschers gestalteten Ringraum statt, der dabei nur den radial über dem Hydromotor gelegenen und vollständig ölgefluteten Gehäusemantelbereich beansprucht, also stirnseitig vor dem Hydromotor auch keinen Abstand zu einer bisher den Beruhigungsraum schaffenden Zwischenwand erforderlich macht.

Weiter wird erreicht, dass die Zwangsströmung durch den Ringraum unmittelbar vom Betrieb der Pumpen abhängt und nicht noch durch wechselnde Wandgängigkeit der Strömungen und Füllungsunterschiede starke Durchflussänderungen im weiteren Vorlagerraum auftreten können. Zudem wird erreicht, dass das abzukühlende Öl sich nicht in Ecken eines Beruhigungsraumes stauen kann, sondern vollständig und weitgehend gleichzeitig den Kühlbereich passieren muss, wobei die wechselnden Arbeitsölmengen aus dem Hydromotor stets mit der am Hydromotor vorbeigeführten Spülölmenge vollständig vermischt werden. Überdies wird erreicht, dass infolge der vollständigen Füllung des Ringraumes auch die höhergelegenen Zonen des Getriebegehäuses im Ringraum in gleicher Weise ölbenetzt sind und nicht, wie beim bekannten Beruhigungsraum, mit unvollständiger Ölfüllung der obere Bereich womöglich schwächer ölbespült wird bzw. dort lokal nur geringere Ölgeschwindigkeiten und somit schlechtere Wärmeübergänge herrschen.

Vorteilhafte Weiterbildungen der Erfindung sind in den Unteransprüchen beschrieben.

Nach Anspruch 2 wird erreicht, dass der eine stirnseitige Abschluss des nun nur über die Hydromotorlänge reichenden Ringraumes gleichzeitig auch ein Abschluss zu einem Getrieberaum ist, in welchem völlig andere Ölströmungen vorliegen können.

Nach Anspruch 3 wird erreicht, dass die Pantscheinflüsse des Hydromotors von der Zwangsströmung im Ringraum ferngehalten werden, wobei im Bereich der Aussenwand hohe, gleichmässige Ölgeschwindigkeiten möglich sind und dennoch, je nach Menge und Richtung, entsprechendes Öl vom Hydromotor abströmen kann.

Nach Anspruch 4 wird erreicht, dass das Öl seinen Weg durch den Ringraum mehrmals mit hohen Geschwindigkeiten vollziehen muss und für den Wärmetauscher viel Austauschfläche bei hohen Differenztemperaturen zur Verfügung steht.

Nach Anspruch 5 wird erreicht, dass jede der Ringraumkammern vom Einlass bis Auslass rückstandfrei durchströmbar ist und dass Ein- und Auslass montagegünstig nebeneinanderliegen können.

Nach Anspruch 6 wird erreicht, dass die Abstandsspalte der Radialstege durch gegensinniges Auseinanderfahren einen unkomplizierten Ausbau und evtl. Querschnittsanpassungen an unterschiedliche Pumpenleistungen erlauben, ohne die Ringraumaufteilung ändern zu müssen.

Nach Anspruch 7 wird erreicht, dass in den Abstandsspalten etwa gleich hohe Geschwindigkeiten vorliegen, wie in den Kammern, so dass dort nicht höhere Druckverluste oder Stauvorgänge möglich sind.

Nach Anspruch 8 wird erreicht, dass die Radialstege intensiv und ohne Isolierungszwischenräume den Wärmetransport an die gekühlten Aussenwände ermöglichen.

Nach Anspruch 9 wird erreicht, dass keine bzw. nur unwesentliche Nebenströmungen auf kürzerem Wege zum Auslass fliessen können.

Nach Anspruch 10 wird erreicht, dass auch am Abschottungsradialsteg kein Kurzschluss zwischen Ein- und Austritt möglich ist und dennoch die einfache Montierbarkeit der Radialstege nicht beeinträchtigt wird.

Nach Anspruch 11 wird erreicht, dass der Ringraum stets völlig ölgeflutet sein kann, ohne dass das Niveau im mechanischen Getriebeteil höher gehalten wird.

Nach Anspruch 12 wird erreicht, dass zwischen mechanischem und hydraulischem Getriebeteil noch eine Verbindungsöffnung, z.B. als Spalt bzw. Bohrung in der Abschlussplatte, vorhanden sein kann, so dass das mechanische Getriebe stets auch aus dem Hydrostatik-Umlauf mitversorgt ist.

Nach Anspruch 13 wird erreicht, dass die Abschlussplatte schraubenlos und ohne zusätzliche äussere Flanschverbindung in das Getriebegehäuse einsetzbar ist.

Nach Anspruch 14 wird erreicht, dass die Drehsicherung anderer Getriebeteile mitverwendbar ist, z.B. durch Mitverwendung eines Hohlrades zum Anpressen und Sichern der Abschlussplatte.

Nach Anspruch 15 wird erreicht, dass auch die am Hydromotor vorbeigeführte Spülölmenge unter Mischung mit dem Arbeitsöl aus dem Hydromotor durch den Ringraum geleitet wird.

Nach Anspruch 16 wird erreicht, dass der Wärmetransport aus dem Kern des Ringraumes bei niedrigem Getriebegewicht zur Aussenluft intensiviert wird.

Nach Anspruch 17 wird erreicht, dass die Aussenfläche auch bei Stillstand des betreffenden Fahrzeuges die Wärme intensiv und relativ gleichmässig abgibt.

Nach Anspruch 18 wird erreicht, dass die Aussenfläche einerseits vor Verschmutzung geschützt und andererseits intensiv und bedarfsgerecht gekühlt ist, indem dem Kühlluftstrom keine Ausweichmöglichkeit gelassen wird.

Nach Anspruch 19 wird erreicht, dass der Ventilatorbetrieb selbsttätig bzw. wahlweise unabhängig vom Hydromotorbetrieb möglich ist.

Nach Anspruch 20 wird erreicht, dass die Verschmutzungsgefahr reduziert und die Oberfläche bedarfsgerecht vergrössert ist.

Nach Anspruch 21 wird erreicht, dass das zwangsdurchströmte Getriebeteil trotz stark gegliederten Aufbaues fertigungsgünstig und leicht herstellbar ist.

Nach Anspruch 22 wird erreicht, dass die Anwendung auch bei Mischtrommelantrieb an sich bekannter Art verwendbar ist.

Die Erfindung wird im folgenden anhand schematischer Zeichnungen weitergehend erläutert.

Fig. 1 stellt einen Längsschnitt durch den einen Hydromotor umgebenden, zwangsdurchströmten Getriebeteil dar, der mit der externen Hydrostatikpumpe bzw. deren Füllpumpe in Verbindung steht.

Fig. 2 zeigt einen Querschnitt durch das Getriebegehäuseteil mit den Aussenrippen und untenliegendem Austritt des Arbeitsmediums in Richtung Füllpumpe.

Fig. 3 zeigt in Vorderansicht eine getriebeseitige Abschlussplatte mit darauf gehalterten Radialstegen zum Einschub zwischen die Innenrippen des Gehäusemantels.

Fig. 4 zeigt eine Anordnung der Strömungslenkungseinrichtungen am Beispiel der Anordnung der Radialstege und Innenrippen des Getriebegehäusemantels in Form einer Abwicklung.

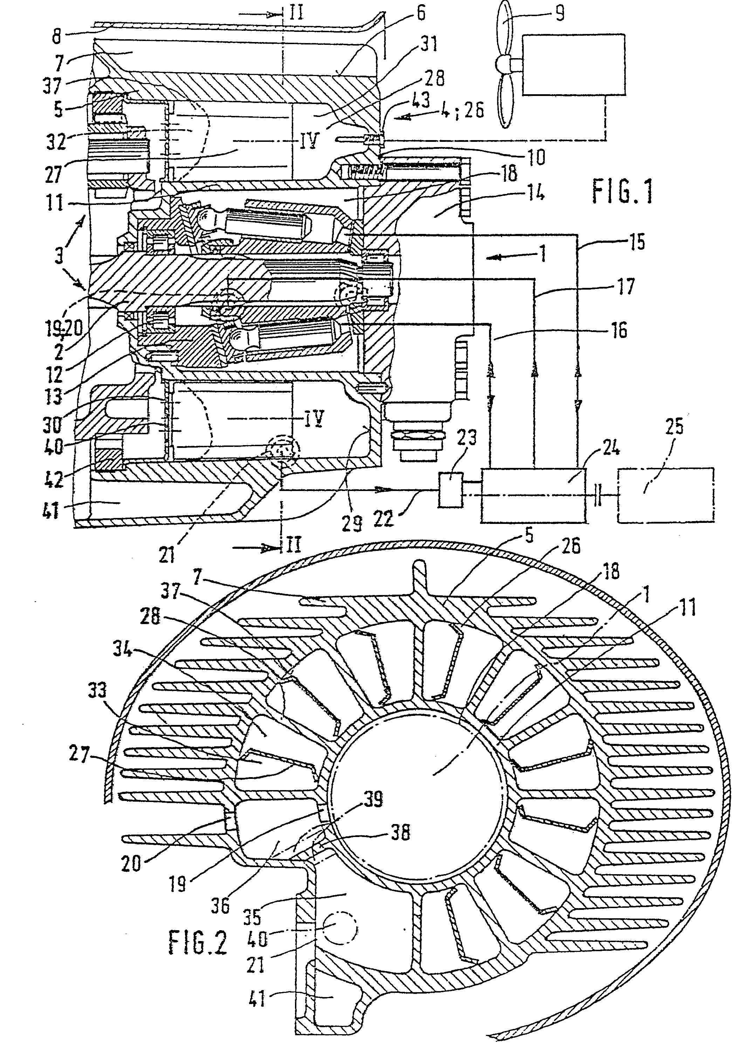

In Fig. 1 ist eine vom Hydromotor 1 angetriebene Welle 2, welche beispielsweise über ein mechanisches Getriebe 3 eine (nicht gezeigte) Mischtrommel oder dergleichen antreibt, von einem zwangsdurchströmten Teil des Getriebegehäuses, Ringraum 4, umgeben. Der Getriebegehäusemantel 5 hat auf seiner Aussenseite eine Kühlfläche 6 mit Aussenrippen 7, die im Beispiel von einem Leitblech 8 zwecks Konzentrierung des Kühlluftstromes umgeben ist, der von einem dem Getriebegehäuse 5 axial vorgeordneten Ventilator 9 ausgeht. Das Getriebegehäuse 5 hat zur Aufnahme des Hydromotors auf seiner Aussenstirnseite einen Flansch 10, der als Innenstutzenrohr 11 unter Überdeckung des Hydromotors 1 in das Getriebegehäuse 5 hineinragend an seinem inneren Ende ein zum mechanischen Getriebeteil 3 abgedichtetes Wellenlager 12 aufweist, das sich gegen eine Schiefscheibe 13 des Hydromotors 1 abstützt. Dem Flansch 10 vorgeordnet ist ein Ventilblock 14, über welchen sowohl die beiden Hochdruck-Zuleitungen 15, 16 als auch die Pumpenleckölleitung 17 zum Ventilblock 14 bzw. Hydromotor 1 gelangen. Ein (nicht dargestelltes) Spülventil im Ventilblock 14 lässt diejenige Arbeitsmedium-Teilmenge, die im Hydromotor 1 nicht benötigt wird, in einen Ringspalt 18 zwischen Hydromotor 1 und Innenstutzenrohr 11 austreten, wo sie sich wieder mit den Auslassmengen des Hydromotors 1 vermischt und zusammen mit denselben in den äusseren Ringraum 4 des Getriebegehäusemantels 5 übertritt. In den Ringraum 4 mündet von aussen her auch die Pumpenleckölleitung 17. Erfindungsgemäss ist nun der Ringspalt 18 bzw. das ihn begrenzende Innenstutzenrohr 11 von einem Ringraum 4 umgeben, durch welchen das durch die Öleintrittsöffnungen 19, 20 einströmende Arbeitsmedium in Richtung zur Auslassöffnung 21 bzw. (über die Füllpumpenleitung 22) zur Füllpumpe 23 gefördert wird, ohne dass in diesem Ringraum 4, z.B. durch Niveauunterschiede oder Strömungsunregelmässigkeiten, wechselnde Wandberührungen zustande kämen. Unabhängig von der Drehrichtung oder -zahl des Hydromotors 1 wird stets der Ringraum 4 ganz gefüllt gehalten und damit der Wärmestrom zur Kühlfläche 6 stabilisiert bzw. intensiviert. Das abgezogene Öl kann somit die Hydrostatikpumpe 24 unmittelbar, d.h. auch ohne dass ein gesonderter Kühler passiert werden muss, wieder in den Hydromotor bzw. den Kühlkreislauf 14, 18, 1, 4, 21, 23 zurückfördern, solange ihr Antriebsmotor 25 läuft. Als besonders wirksame Massnahme zur Steigerung des Wärmestromes hat sich die erfindungsgemässe Unterteilung des Ringraumes 4 in einzelne Kammern 26 mittels Radialstegen 27 bzw. 28, welche von jeweils wechselnden Abschlussplatten 29 bzw. 30 aus zwischeneinandergreifen, bewährt. Dabei ist je ein Steg als Zwischensteg 27 zwischen zwei Zwischenrippen 28 axial mit frontseitigen Abständen eingeschoben. Indem die axiale Länge der Radialstege 27, 28 geringer als die Länge des Ringraumes 4 gewählt ist, bleibt vor den Abschlussplatten 29, 30 jeweils ein Durchlassquerschnitt 31, 32 zum Umwenden des den Stegen 27, 28 entlangströmenden Arbeitsmediums in die jeweilige Gegenrichtung. Damit entsteht ein in Abwicklung mäanderartiges Durchlaufbild mit starker Radialströmung in den Kammern 26 gegen die Kühlfläche 6 hin, da die Einzelquerschnitte 33, 34 der Kammern zur Aussenwand hin verbreitert sind.

In Fig. 2 ist der Verlauf der erfindungsgemässen Zwangsströmung im Ringraum 4 in einem Querschnitt des Antriebs mit den Stegen 27, 28 und den Aussenrippen 7 verdeutlicht. Der Auslass 21 zur Füllpumpenleitung 22, welchem vorzugsweise ein (nicht dargestellter) unmittelbar an das Getriebegehäuse 5 angeflanschter Filter nachgeordnet ist, befindet sich hier in der Seite einer tiefstgelegenen grossen Sammelkammer 35, welche keinen Mittelsteg von der gegenüberliegenden Abschlussplatte 30 her aufweist. Im Uhrzeigersinne benachbart ist die ebenfalls zwischenstegfreie Einlasskammer 36, in welche die Öleintritte 19 (aus dem Ringspalt 18) und 20 (aus der Pumpenleckölleitung 17) münden. Von da an weiter im Uhrzeigersinne umlaufend weisen dann alle normalen Kammern 26 rings um den Hydromotor 1 je einen axial eingeschobenen Zwischensteg 27 auf, welcher mit Seitenüberstandsflächen 37 federnd an die Seitenwände der Kammern anliegt und nur auf der dem mechanischen Getriebeteil 3 zugewandten Stirnseite von der herausnehmbaren Abschlussplatte 29 festgehalten ist. Sowohl die mit dem Getriebegehäusemantel 5 einstückig verbundenen Zwischenrippen 28 als auch die Zwischenstege 27 zwingen das zum Auslass 21 abfliessende Arbeitsmedium zum mehrfachen Kreuzen der intensiv angeblasenen Kühlfläche 6.

Zur Vermeidung von Rückströmungen zwischen Sammelkammer 35 und Einlasskammer 36 ist an einem hier an tiefstgelegener Stelle angeordneten Abschottungsradialsteg 38 ein Dichtprofil 39 eingesetzt. Durch die intensive Wärmeableitung mittels der dicht an dicht angeordneten Aussenrippen und der dazu einstückigen Zwischenrippen 28 sowie der eng anliegenden Zwischenstege 27 und des Getriebegehäusemantels 5 verliert das Öl viel von seiner Wärme auf sehr kurzem Wege nach aussen hin. Zur Vermeidung unnötiger Druckverluste können die stirnseitigen Durchlassquerschnitte 31, 32 dabei gleich oder grösser wie die Querschnitte der Kammern 26 bemessen werden. Die einstückige Anbindung der Zwischenrippen 28 an den Getriebegehäusemantel 5 ist dabei nicht nur zwecks besserer Wärmeleitung, sondern auch im Hinblick auf die Festigkeit des den Hydromotor 1 tragenden Antriebsgehäuses vorteilhaft. Sofern der Hydromotor 1, wie im Beispiel, mit einem mechanischen Getriebe gekoppelt ist, kann durch eine Verbindungsöffnung 40 von der Sammelkammer 35 zur Ölwanne des mechanischen Getriebes 3 eine Kommunikationsmöglichkeit für die beiden Ölmengen vorgesehen werden, um nur einen gemeinsamen Ölinhalt überwachen zu müssen. Durch im Getriebegehäusemantel 5 festgelegte Getriebeelemente 42 (z.B. ein Hohlrad) kann auch in vorteilhafter Weise die Abschlussplatte 30 zusammen mit den von ihr gehaltenen Radialstegen 27 axial und radial festgelegt und am Umfang abgedichtet werden, ohne dass es dazu eines eigenen Zwischenflansches bedarf.

Für den Fall, dass grössere Ölmengen zu kühlen sind bzw. die Kühlleistung mit der vorstehend geschilderten Zwischensteganordnung noch nicht ausreicht, besteht, ohne die Erfindung zu verlassen, auch noch die Möglichkeit, anstelle der Zwischenstege Einzelrohre einzusetzen und diese eintrittsseitig und austrittsseitig in entsprechender Weise miteinander zu verbinden, so dass mehrere parallele Teilströme entstehen, deren Verweilzeit im Kühlflächenbereich zwar kürzer, deren Differenztemperatur nach aussen hin jedoch höher liegen könnte, so dass trotz höherer Öldurchsätze eine noch ausreichende Wärmeabfuhr möglich wird.

Da im Falle des als Beispiel gewählten Mischerantriebes jedoch ohnehin nur sporadischer Einsatz des Hydromotors 1 nötig ist und daher auch kaum Wärme in der übrigen Zeit anfällt, kann der beispielsweise über einen in das Öl eintauchenden Thermoschalter 43 bedarfsweise steuerbare Ventilator 9 in den erwähnten Schwachlastzeiten mit evtl. kurzzeitigen Überschuss-Wärmemengen leicht fertig werden.

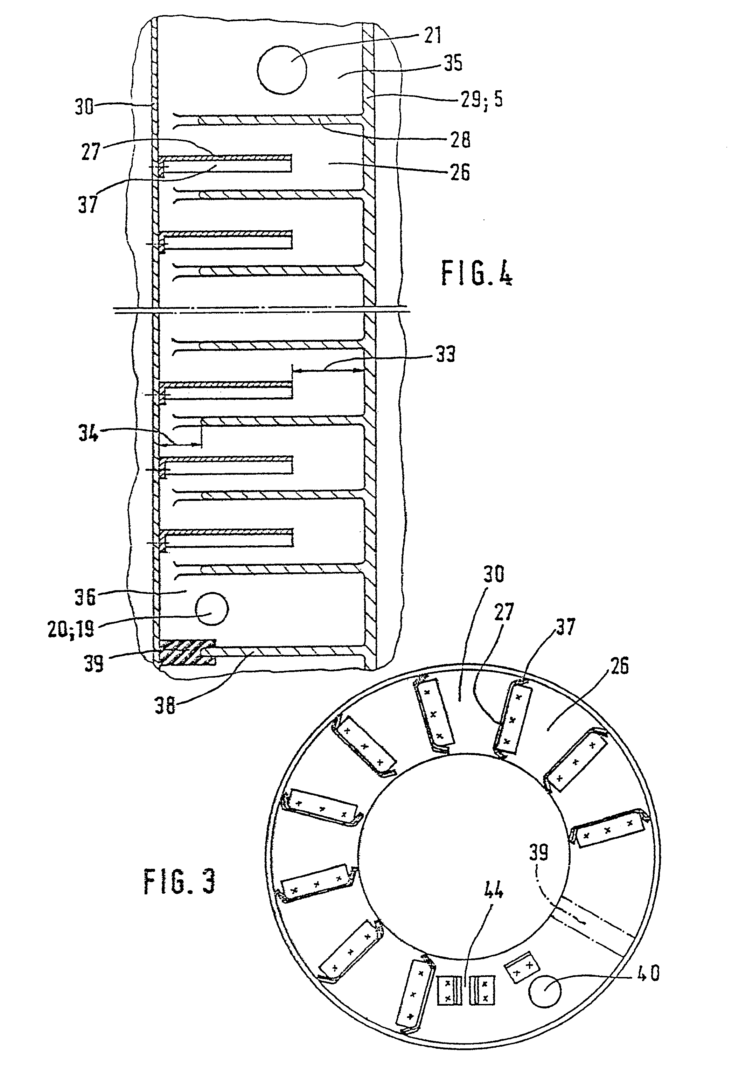

In Fig. 3 ist die Anordnung der Zwischenstege 27 auf der getriebeseitigen Abschlussplatte 29 dargestellt. Durch Arretierungstaschen 44 wird Falschmontage verhindert. Die Verbindungsöffnung 40 kommt unten zu liegen.

In Fig. 4 ist die Anordnung der Strömungslenkungseinrichtungen am Beispiel der Radialstege 27, 28 für Mehrfach-Kreuzstrom mit den Eintritts- und Auslassöffnungen 19, 20, 21 in Abwicklung dargestellt. Hierin ist die mit dem Getriebegehäusemantel 5 einstückige Abschlussplatte 29 unten und die Zwischenrippen 28 ragen nach oben. Dabei entstehen einzelne Kammern 26, in welche die an der oberen Abschlussplatte 30 angebrachten Zwischenstege 27 auf etwa halber Länge der Zwischenrippen 28 hineinreichen. Der bei der Eintrittsöffnung 18 beginnende Anfang der Zwangsströmung ist von ihrem Ende bei der Auslassöffnung 21 durch den Abschottungsradialsteg 38 mit dem diesem aufgesetzten Dichtprofil 39 flüssigkeitsdicht abgetrennt. Durch die wechselseitige Anordnung von Zwischenrippen 28 und Zwischenstegen 27 erfährt die Strömung vom Einlass 19 bzw. 20 zur Auslassöffnung 21 einen mäanderartigen Verlauf rings um das hydrostatische Getriebeteil. Durch die nicht durch Zwischenstege unterbrochenen, vergrösserten Querschnitte der Einlass- und Sammelkammer 35 bzw. 36 werden Stauvorgänge im Ein- und Auslassbereich vermieden.

Die erfindungsgemässe Ausgestaltung eines hydrostatischen Antriebes mit integrierter Umwälzölkühlung ist selbstverständlich nicht nur auf Fälle beschränkt, bei denen die Ölumwälzung einem konventionellen Hydromotor bzw. einer externen Füllpumpe zufällt. Statt dessen sind gleiche Wirkungen natürlich auch bei anderen Pumpvorrichtungen und Erwärmungsursachen mit der erfindungsgemässen Getriebegehäuse-Ausgestaltung erzielbar.

*Bezugszeichen*

1 Hydromotor
2 Welle
3 Mechanisches Getriebeteil
4 Zwangsdurchströmtes Getriebeteil (Ringraum)
5 Getriebegehäusemantel
6 Kühlfläche

7   Aussenrippen
8   Leitblech
9   Ventilator
10  Flansch
11  Innenstutzenrohr
12  Wellenlager
13  Schiefscheibe von 1
14  Ventilblock
15  Hochdruck-Zuleitung
16  Hochdruck-Zuleitung
17  Pumpenleckölleitung
18  Ringspalt um 1
19  Öleintrittsöffnung von 18
20  Öleintrittsöffnung von 17
21  Auslassöffnung
22  Füllpumpenleitung
23  Füllpumpe
24  Hydrostatikpumpe
25  Antriebsmotor
26  Strömungskammern
27  Radialstege (Zwischenstege)
28  Radialstege (Zwischenrippen an 5)
29  Abschlussplatte an 5
30  Abschlussplatte an 27
31  Durchlassquerschnitt vor 29
32  Durchlassquerschnitt vor 28
33  Einzelquerschnitte oberhalb 27
34  Einzelquerschnitte unterhalb 27
35  Sammelkammer
36  Einlasskammer
37  Seitenüberstandsflächen von 27
38  Abschottungsradialsteg
39  Dichtprofil zwischen 38 und 30
40  Verbindungsöffnung von 35 und 3
41  Ölwanne von 3
42  Getriebeelement in 3 festgelegt (z.B. Hohl-rad)
43  Thermoschalter
44  Arretierungstasche

**Patentansprüche**

1. Hydrostatischer Antrieb, insbesondere für Mischtrommeln von Transportbetonfahrzeugen,
– bei welchem ein Getriebegehäusemantel (5), der einem Hydromotor (1) zugeordnet ist, für dessen Arbeitsmedium sowohl als einzige Kühlfläche (6) als auch als Vorratsbehälter dient,
– wobei der Hydromotor (1) zur zugehörigen, extern angeordneten und angetriebenen Hydrostatikpumpe (24) und zu einer dieser zugeordneten Füllpumpe (23) über Verbindungsleitungen (15, 16, 17, 22) Anschlüsse hat,
dadurch gekennzeichnet, dass ein den Hydromotor (1) umgebender Getriebegehäuseteil (4) in einzelne, zwangsdurchströmte Kammern (26) für dem Hydromotor (1) entströmendes und zur Füllpumpe (23) abfliessendes Arbeitsmedium unterteilt ist, deren Zwischenwände (27, 28) zum Getriebegehäusemantel (5) Verbindung haben.
2. Antrieb nach Anspruch 1, dadurch gekennzeichnet, dass das zwangsdurchströmte Getriebegehäuseteil (4) ein im wesentlichen radial über dem Hydromotor sich auf dessen Einbaulänge erstreckendes und nach aussen bzw. gegen ein Ölbad aufweisendes Getriebe (3) mit Abschlussplatten (29, 30) begrenzter Ringraum (4) ist.

3. Antrieb nach Anspruch 2, dadurch gekennzeichnet, dass der Ringraum (4) umfangsmässig aussen von einem mit Rippen (7) versehenen Bereich des Getriebegehäusemantels (5) und innen von einem den Hydromotor (1) umschliessenden Innenstutzenrohr (11) begrenzt ist.

4. Antrieb nach Anspruch 2 oder 3, dadurch gekennzeichnet, dass der Ringraum (4) mittels wechselseitig an je nur einer Stirnseite des Ringraumes (4) anliegender und zur jeweils gegenüberliegenden Stirnseite mit Abstand bzw. Durchlassquerschnitten (31, 32) endenden Radialstegen (27, 28) zu einem etwa achsparallelen Strömungskanal derart ausgestaltet ist, dass in aufeinanderfolgenden Strömungskammern (26) die Strömungsrichtung wechselt.

5. Antrieb nach Anspruch 4, dadurch gekennzeichnet,
– dass der Strömungskanal seinen Beginn hat bei einer zum Innenstutzenrohr (11) offenen Einlasskammer (36) zwischen zwei Radialstegen (28) des Ringraumes (4)
– und dass er sein Ende hat bei einer von der Einlasskammer (36) durch einen an beiden Stirnseiten des Ringraumes (4) dicht anliegenden Abschottungsradialsteg (38) abgetrennten Sammelkammer (35) mit Auslassöffnung (21) zur Füllpumpe (23).

6. Antrieb nach Anspruch 4 oder 5, dadurch gekennzeichnet, dass die Radialstege (27, 28) abwechselnd mit Abstand jeweils vor einer abtriebsseitigen ersten Abschlussplatte (30) des Gehäusemantels (5) und vor einer an der gegenüberliegenden Seite des Gehäusemantels (5) gelegenen zweiten Abschlussplatte (29) (Getriebegehäuseboden) enden, wobei die anderen Enden der Radialstege (27, 28) jeweils an die zweite bzw. erste Abschlussplatte (29, 30) dichtend befestigt sind.

7. Antrieb nach einem der Ansprüche 4 bis 6, dadurch gekennzeichnet, dass die stirnseitigen Abstände des Radialsteges (27, 28) gegenüber den Abschlussplatten (29, 30) etwa gleich grosse Durchlassquerschnitte (31, 32) freigeben, wie sie zwischen je zwei Radialstegen im Einbauzustand vorliegen.

8. Antrieb nach Anspruch 6 oder 7, dadurch gekennzeichnet, dass die an der zweiten Abschlussplatte (29) befestigten Radialstege (28) als Verbindungsrippen zwischen Mantel (5) und Innenstutzenrohr (11) mit diesen einstückig verbunden sind.

9. Antrieb nach einem der Ansprüche 6 bis 8, dadurch gekennzeichnet, dass die an der ersten Abschlussplatte (30) befestigten Radialstege (27) gegen den Getriebegehäusemantel (5) und das Innenstutzenrohr (11) federnd anliegende Seitenüberstandsflächen (37) aufweisen.

10. Antrieb nach einem der Ansprüche 6 bis 9, dadurch gekennzeichnet, dass der Abschottungsradialsteg (38) den übrigen Radialstegen (27, 28) entsprechende Abmessungen aufweist, jedoch sein Abstand zu seiner Befestigung gegenüberliegenden Stirnseite des Ringraumes (4) durch ein flexibles Dichtprofil (39) verschlossen ist.

11. Antrieb nach einem der Ansprüche 6 bis 10, dadurch gekennzeichnet, dass auf an sich bekannte Weise der Getriebegehäusemantel (5) ausser dem Hydromotor (1) auch noch ein mechanisches, jedoch ein Ölbad aufweisendes Getriebe (3) umschliesst und dieses durch eine Verbindungsöffnung (40) mit dem Getriebegehäuseteil (4) kommuniziert, so dass der Getriebegehäusemantel (5) sowohl für das mechanische Getriebe (3) eine zusätzliche Ölwanne (41) als auch für die Füllpumpe (23) der Hydrostatikpumpe (24) Ansaugvorlage ist.

12. Antrieb nach einem der Ansprüche 6 bis 11, dadurch gekennzeichnet, dass die erste Abschlussplatte (30) des Ringraumes (4) gegenüber dem mechanischen Getriebe (3) mindestens eine Verbindungsöffnung (40) aufweist.

13. Antrieb nach einem der Ansprüche 6 bis 12, dadurch gekennzeichnet, dass die erste Abschlussplatte (30) getriebeseitig gegen Dichtkanten am Mantel (5) und Innenstutzenrohr (11) angepresst ist.

14. Antrieb nach einem der Ansprüche 6 bis 13, dadurch gekennzeichnet, dass die erste Abschlussplatte (30) mittels drehfester Getriebeelemente (42) im Getriebegehäusemantel (5) axial und in Umfangsrichtung festgelegt ist.

15. Antrieb nach einem der Ansprüche 3 bis 14, dadurch gekennzeichnet, dass der Hydromotor (1) im Getriebegehäusemantel (5) mittels eines Flansches (10) gehalten ist, welcher als Ventilblock (14) ausgebildet ist und auch ein Spülventil enthält, das in einen zwischen Hydromotor (1) und Innenstutzenrohr (11) vorhandenen Ringspalt (18) (Zwischenraum) mündet.

16. Antrieb nach einem der Ansprüche 3 bis 15, dadurch gekennzeichnet, dass sowohl die den Ringraum (4) unterteilenden als auch die ihn umgebenden Teile des Getriebegehäusemantels (5) aus Aluminium bestehen.

17. Antrieb nach einem der Ansprüche 3 bis 16, dadurch gekennzeichnet, dass die Aussenrippen (7) von einem durch einen Ventilator (9) erzeugten Kühlluftstrom anblasbar sind.

18. Antrieb nach einem der Ansprüche 3 bis 17, dadurch gekennzeichnet, dass der Kühlluftstrom mittels einer Verkleidung (8) im Bereich der Aussenrippen (7) konzentriert ist.

19. Antrieb nach einem der Ansprüche 17 bis 18, dadurch gekennzeichnet, dass der Ventilator (9) von einem in den Ringraum (4) eingesetzten Thermoschalter (43) nach Bedarf selbsttätig steuerbar ist.

20. Antrieb nach einem der Ansprüche 3 bis 19, dadurch gekennzeichnet, dass die Aussenrippen (7) vom Getriebegehäusemantel (5) überwiegend waagerecht abstehende Einzelrippen sind.

21. Antrieb nach einem der Ansprüche 3 bis 20, dadurch gekennzeichnet, dass das den Ringraum (4) umgebende Teil des Getriebegehäusemantels (5) als einstückiges Druckgussteil ausgebildet ist.

22. Antrieb nach einem der Ansprüche 3 bis 21, dadurch gekennzeichnet, dass das den Ringraum (4) und den Hydromotor (1) enthaltende Teil des Getriebegehäuses (5) einem Mischtrommelantrieb an sich bekannter Art koaxial vorgeordnet ist.

## Claims

1. A hydrostatic drive, specially for mixing drums of ready-mixed concrete vehicles,
   - wherein a transmission casing (5) incorporating a hydromotor (1) serves both as single cooling area (6) and as reservoir for the working fluid of said hydromotor,
   - said hydromotor (1) communicating via connecting ducts (15, 16, 17, 22) with a respective externally situated and driven hydrostatic pump (24) and the filling pump (23) appertaining thereto,
   characterized in that a transmission casing portion (4) surrounding said hydromotor (1) is subdivided into separate chambers (26) traversed by forced flow for the working fluid that flows out from said hydromotor to said filling pump (23), the partitions (27, 28) of said chambers communicating with said transmission casing (5).

2. A drive according to claim 1, characterized in that said transmission casing portion (4) traversed by forced flow is an annular space (4) that extends substantially radially over said hydromotor to the laid length thereof and that is limited by stop plates (29, 30) outwardly or toward a transmission (3) having an oil bath.

3. A drive according to claim 2, characterized in that said annular space (4) is peripherally defined externally by an area of said transmission casing (5) provided with ribs (7) and internally by an inner connecting pipe (11) that surrounds said hydromotor (1).

4. A drive according to claim 2 or 3, characterized in that said annular space (4) is shaped by means of radial vanes (27, 28), each one alternately abutting on only one front side and ending with a spacing or passage areas (31, 32) from the respectively opposite front side to form a flow channel approximately concentric for continnously changing the flow direction in each of the flow chambers (26).

5. A drive according to claim 4, characterized in that
   - said flow channel begins at an inlet chamber (36) that opens toward said inner connecting pipe (11) and is between two radial vanes (28) of said annular space (4)
   - and it ends at a collecting chamber (35) having the outlet opening (21) to the filling pump (23) and separated from said inlet chamber (36) by a partitioning radial vane (38) closely abutting on both front sides of said annular space (4).

6. A drive according to claim 4 or 5, characterized in that the radial vanes (27, 28) alternately end with a spacing before a first stop plate (30) mounted on the output side of the transmission casing (5) and before a second stop plate (29) (bottom of transmission casing) situated on the opposite side of the transmission casing (5) respectively, the other ends of the radial vanes being sealingly mounted on the second and first stop plate (29, 30) respectively.

7. A drive according to claims 4 to 6, characterized in that the front spaces of said radial vane (27, 28) leave free, opposite said stop plates (29, 30), passage cross sections (31, 32) of approximately the same size as those between each two radial vanes in assembled state.

8. A drive according to claim 6 or 7, characterized in that said radial vanes (28) secured to said second stop plate (29) as connecting ribs between said casing (5) and said inner connecting pipe (11) are integrally connected therewith.

9. A drive according to claims 6 to 8, characterized in that said radial vanes (27) secured to said first stop plate (30) have lateral projecting surfaces (37) yieldably abutting against said transmission casing (5) and said inner connecting pipe (11).

10. A drive according to any one of claims 6 to 9, characterized in that said partitioning radial vane (38) has dimensions corresponding to the remaining radial vanes (27, 28), but the spacing thereof from the front side of said annular space (4) opposite its fastening point is closed by a flexible sealing vertical section (39).

11. A drive according to any one of claims 6 to 10, characterized in that in a manner known per se said transmission casing (5) incorporates in addition to said hydromotor (1) a mechanical gear (3) having an oil bath and intercommunicating by a connecting opening (40) with said annular space (4) so that said transmission casing (5) is both an additional oil sump (41) for said mechanical gear (3) and a suction reservoir for said filling pump (23) of said hydromotor (1).

12. A drive according to any one of claims 6 to 11, characterized in that said first stop plate (30) of said annular space (5) comprises at least one connecting opening (40) directed toward said mechanical gear (3).

13. A drive according to any one of claims 6 to 12, characterized in that said first stop plate (30) is compressed on the gear side against sealing edges on said casing (5) and said inner connecting pipe (11).

14. A drive according to any of claims 6 to 13, characterized in that said first stop plate (30) is locked axially and in peripheral direction by means of anti-twist gear elements (42) in said transmission casing (5).

15. A drive according to any one of claims 3 to 14, characterized in that said hydromotor (1) is held in said transmission casing (5) by means of a flange (10) constructed as valve block (14) and containing also a flushing valve that discharges in an annular gap (18) (intermediate space) between said hydromotor (1) and said inner connecting pipe (11).

16. A drive according to any one of claims 3 to 15, characterized in that both the portions of said transmission casing (5) that subdivide said annular space (4) and those that surround it are made of aluminum.

17. A drive according to any one of claims 3 to 16, characterized in that said outer ribs (7) can be blasted by a cool air current produced by a ventilator (9).

18. A drive according to any one of claims 3 to 17, characterized in that said cool air current is concentrated by means of a lining (8) in the area of said outer ribs (7).

19. A drive according to any one of claims 3 to 18, characterized in that said ventilator (9) can be automatically controlled as needed by a thermal switch (43) inserted in said annular space (4).

20. A drive according to any one of claims 3 to 19, characterized in that said outer ribs (7) are separate ribs projecting predominantly horizontally from said transmission casing (5).

21. A drive according to any one of claims 3 to 20, characterized in that said portion of said transmission casing (5) surrounding said annular space (4) is constructed as integral die-cast part.

22. A drive according to any one of claims 3 to 21, characterized in that said portion of said transmission (5) containing said annular space (4) and said hydromotor (1) is coaxially situated in a manner known per se before a mixing drum drive.

## Revendications

1. Dispositif d'entraînement hydrostatique, notamment pour des tambours mélangeurs dans des camions pour le transport de béton,

— dans lequel une enveloppe de carter de transmission (5), qui est associée à un moteur hydraulique (1), sert à la fois de surface unique de refroidissement (6) du fluide hydraulique et de réservoir pour ce fluide,

— et dans lequel le moteur hydraulique (1) est raccordé par des conduites de liaison (15, 16, 17, 22) à une pompe hydrostatique (24) respective, disposée et entraînée à l'extérieur du dispositif, et à une pompe de remplissage (23) associée à cette pompe hydrostatique,

caractérisé en ce qu'une partie (4) du carter de transmission, entourant le moteur hydraulique (1), est divisée en chambres distinctes (26) traversées par une circulation forcée du fluide hydraulique sortant du moteur hydraulique (1) et s'écoulant vers la pompe de remplissage (23), ces chambres ayant des parois intermédiaires (27, 28) qui sont reliées à ladite enveloppe (5) du carter.

2. Dispositif selon la revendication 1, caractérisé en ce que ladite partie (4) à circulation forcée du carter de transmission est une zone annulaire (4) qui s'étend essentiellement radialement sur toute la longueur du moteur hydraulique et qui est délimitée par des plaques de fermeture respectives (29, 30) par rapport à l'extérieur et à une transmission (3) comportant un bain d'huile.

3. Dispositif selon la revendication 2, caractérisé en ce que ladite zone annulaire (4) est délimitée radialement, à l'extérieur par une portion de ladite enveloppe de carter de transmission (5), pourvue d'ailettes (7), et à l'intérieur par un support tubulaire (11) entourant le moteur hydraulique (1).

4. Dispositif selon la revendication 2 ou 3, caractérisé en ce que ladite zone annulaire (4) est formée en un conduit de circulation dans lequel l'écoulement est sensiblement axial, au moyen de cloisons radiales (27, 28) qui s'étendent alternativement jusqu'à l'une des faces frontales de la zone annulaire (4) et qui présentent un intervalle ou des ouvertures de circulation (31, 32) à proximité de la face frontale respective opposée, de sorte que les sens respectifs de l'écoulement dans les chambres consécutives (26) sont alternés.

5. Dispositif selon la revendication 4, caractérisé:

— en ce que ledit conduit de circulation commence par une chambre d'entrée (36), située entre deux cloisons radiales (28) de la zone annulaire (4) et communiquant avec l'intérieur dudit support tubulaire (11),

— et en ce que ce conduit se termine dans une chambre collectrice (35) pourvue d'un orifice de sortie (21) vers la pompe de remplissage (23), cette chambre collectrice étant séparée de la chambre d'entrée (36) par une cloison étanche radiale (38) qui est raccordée de manière étanche aux deux parois frontales de la zone annulaire (4).

6. Dispositif selon la revendication 4 ou 5, caractérisé en ce que lesdites cloisons radiales consécutives (27, 28) ont alternativement une première extrémité se trouvant à un certain intervalle, respectivement, d'une première plaque de fermeture (30) de l'enveloppe de carter (5) du côté de la sortie de la transmission et d'une seconde plaque de fermeture (29) située du côté opposé (fond du carter de transmission), l'autre extrémité de ces cloisons (27, 28) étant fixée de manière étanche à la seconde, respectivement à la première plaque de fermeture (29, 30).

7. Dispositif selon l'une quelconque des revendications 4 à 6, caractérisé en ce que lesdits intervalles entre la première extrémité des cloisons radiales (27, 28) et les plaques de fermeture (29, 30) correspondent à des sections de passage (31, 32) qui sont sensiblement égales aux sections existant entre deux cloisons radiales consécutives.

8. Dispositif selon la revendication 6 ou 7, caractérisé en ce que les cloisons radiales (28) fixées à la seconde plaque de fermeture (29) sont réalisées d'une pièce avec ladite enveloppe (5) et ledit support tubulaire intérieur (11), sous forme de nervures de liaison.

9. Dispositif selon l'une quelconque des revendications 6 à 8, caractérisé en ce que les cloisons radiales (27) fixées à la première plaque de fermeture (30) comportent des rebords saillants (37) qui s'appuient élastiquement contre l'enveloppe de carter (5) et le support tubulaire intérieur (11).

10. Dispositif selon l'une quelconque des revendications 6 à 9, caractérisé en ce que ladite cloison étanche radiale (38) a des dimensions qui correspondent à celles des autres cloisons radiales (27, 28), l'intervalle qui la sépare de la face frontale opposée à celle à laquelle elle est fixée étant obturé par un profilé souple d'étanchéité (39).

11. Dispositif selon l'une quelconque des revendications 6 à 10, caractérisé en ce que, de manière connue, l'enveloppe de carter de transmission (5) entoure aussi, en plus du moteur hydraulique, une transmission mécanique (3) comportant un bain d'huile et que celle-ci communique avec ladite partie à circulation forcée (4) du carter de transmission, de manière que cette enveloppe (5) constitue à la fois un bac à huile supplémentaire (41) pour la transmission mécanique (3) et un réservoir d'admission pour la pompe de remplissage (23) de la pompe hydrostatique (24).

12. Dispositif selon l'une quelconque des revendications 6 à 11, caractérisé en ce que la première plaque de fermeture (30) de la zone annulaire (4) comporte au moins un orifice de liaison (40) du côté de la transmission mécanique (3).

13. Dispositif selon l'une quelconque des revendications 6 à 12, caractérisé en ce que la première plaque de fermeture (30), du côté de la transmission, est pressée contre des arêtes d'étanchéité de l'enveloppe (5) et du support tubulaire intérieur (11).

14. Dispositif selon l'une quelconque des revendications 6 à 13, caractérisé en ce que la première plaque de fermeture (30) est fixée axialement et en rotation par rapport à l'enveloppe de carter de transmission (5) au moyen d'éléments (42) de la transmission qui sont fixes en rotation.

15. Dispositif selon l'une quelconque des revendications 3 à 14, caractérisé en ce que le moteur hydraulique (1) est maintenu dans l'enveloppe de carter (5) au moyen d'un flasque (10) qui est constitué par un bloc de soupapes (14) et qui renferme aussi une soupape de décharge qui débouche dans un intervalle annulaire (18) situé entre le moteur hydraulique (1) et le support tubulaire intérieur (11).

16. Dispositif selon l'une quelconque des revendications 3 à 15, caractérisé en ce que les parties de l'enveloppe de carter (5) qui entourent ladite zone annulaire (4), ainsi que les parties qui subdivisent cette zone, sont en aluminium.

17. Dispositif selon l'une quelconque des revendications 3 à 16, caractérisé en ce que les ailettes extérieures (7) sont exposées à un courant d'air de refroidissement produit par un ventilateur (9).

18. Dispositif selon l'une quelconque des revendications 3 à 17, caractérisé en ce que le courant d'air de refroidissement est concentré dans la zone des ailettes extérieures (7) au moyen d'un carénage (8).

19. Dispositif selon la revendication 17 ou 18, caractérisé en ce que le ventilateur (9) est commandé automatiquement, en fonction des besoins, par un thermocontact (43) s'étendant dans ladite zone annulaire (4).

20. Dispositif selon l'une quelconque des revendications 3 à 19, caractérisé en ce que lesdites ailettes extérieures (7) comprennent essentiellement des ailettes s'étendant horizontalement à partir de l'enveloppe de carter de transmission (5).

21. Dispositif selon l'une quelconque des revendications 3 à 20, caractérisé en ce que la partie de l'enveloppe de carter de transmission (5) qui entoure ladite zone annulaire (4) est faite d'une seule pièce coulée sous pression.

22. Dispositif selon l'une quelconque des revendications 3 à 21, caractérisé en ce que la partie du carter de transmission (5) qui renferme ladite zone annulaire (4) et le moteur hydraulique (1) est montée coaxialement, d'une manière connue en soi, à l'entrée d'un mécanisme d'entraînement d'un tambour mélangeur.

0 128 145

FIG.1

FIG.2

0 128 145

FIG.4

FIG.3

13